Europäisches Patentamt

European Patent Office

Office européen des brevets

(19)

(11) Numéro de publication: **0 102 432**
**A1**

## (12) DEMANDE DE BREVET EUROPEEN

(21) Numéro de dépôt: **82401627.3**

(22) Date de dépôt: **03.09.82**

(51) Int. Cl.³: **A 01 J 25/16**

(43) Date de publication de la demande:
**14.03.84 Bulletin 84/11**

(84) Etats contractants désignés:
**CH DE FR LI NL**

(71) Demandeur: **SERAP S.A. Société Anonyme dite:**
**rue des Peupliers**
**F-14500 Vire(FR)**

(72) Inventeur: **Vivat, Jacques J.M.**
**Le Puits Saint-Pair**
**F-14500 Vaudry(FR)**

(74) Mandataire: **Moulines, Pierre et al,**
**Cabinet BEAU de LOMENIE 55, rue d'Amsterdam**
**F-75008 Paris(FR)**

(54) procédé et dispositif de retournement de produits laitiers, notamment de fromages.

(57) Procédé pour le retournement de produits laitiers, notamment de fromages disposés sur des claies empilées les unes sur les autres.

Il consiste à disposer les piles (4) de claies portant les produits laitiers (1) suivant une file A pour alimenter un moyen (12, 29) assurant séquentiellement la rotation d'une pile (4) de claies suivant un angle de 180° et son transfert suivant une direction perpendiculaire à l'axe A de la file d'entrée pour emener celle-ci en regard d'une file B d'évacuation des piles de claies portant les produits laitiers en position retournée.

FIG.4

EP 0 102 432 A1

Procédé et dispositif de retournement de produits laitiers, notamment de fromages.

La présente invention a pour objet un procédé et un dispositif de retournement de produits laitiers, notamment de fromages.

Lors de la fabrication des fromages, il est nécessaire de procéder plusieurs fois à leur retournement et, à cet effet, les fromages sont disposés sur des claies qui, de façon connue, sont retournées manuellement.

Toutefois, un tel procédé est lent, nécessite un personnel très important et, par conséquent, il est très onéreux. Pour remédier à ces inconvénients, la présente invention propose un procédé et un dispositif plus rapide et qui ne nécessite qu'un personnel très réduit.

Conformément à la présente invention, on utilise un procédé pour le retournement de produits laitiers, notamment de fromages disposés sur des claies empilées les unes sur les autres, caractérisé en ce qu'il consiste à disposer les piles de claies portant les produits laitiers suivant une file A pour alimenter un moyen assurant séquentiellement la rotation d'une pile de claies suivant un axe de 180° et son transfert suivant une direction perpendiculaire à l'axe A de la file d'entrée pour amener celle-ci en regard d'une file B d'évacuation des piles de claies portant les produits laitiers en position retournée.

Suivant une autre caractéristique, on utilise un dispositif qui comprend un chariot déplaçable suivant un chemin de roulement perpendiculaire aux files d'entrée A et de sortie B des piles de claies, ledit chariot présentant à sa partie supérieure un organe de support sur lequel est fixé un axe sur lequel est monté rotatif un bras portant à l'une de ses extrémités un palier dans lequel est monté rotatif un arbre solidaire à l'une de ses extrémités d'un cadre de support des claies et à son autre extrémité d'un organe moteur d'entraînement en rotation, ledit bras étant articulé à son autre extrémité sur une tige de commande d'un vérin articulé sur le chariot.

D'autres caractéristiques et avantages de l'invention seront mieux compris à la lecture de la description qui va suivre d'un mode de réalisation et en se référant au dessin annexé, sur lequel :

- la figure 1 est une vue en perspective du dispositif de retournement de produits laitiers suivant l'invention;

- la figure 2 est une vue en élévation de la face arrière du dispositif de retournement;

- la figure 3 est une vue en élévation latérale du dispositif de retournement;

- la figure 4 est une vue en plan du dispositif de retournement;

- la figure 5 est une vue du moyen d'accrochage des piles de claies sur les plateaux.

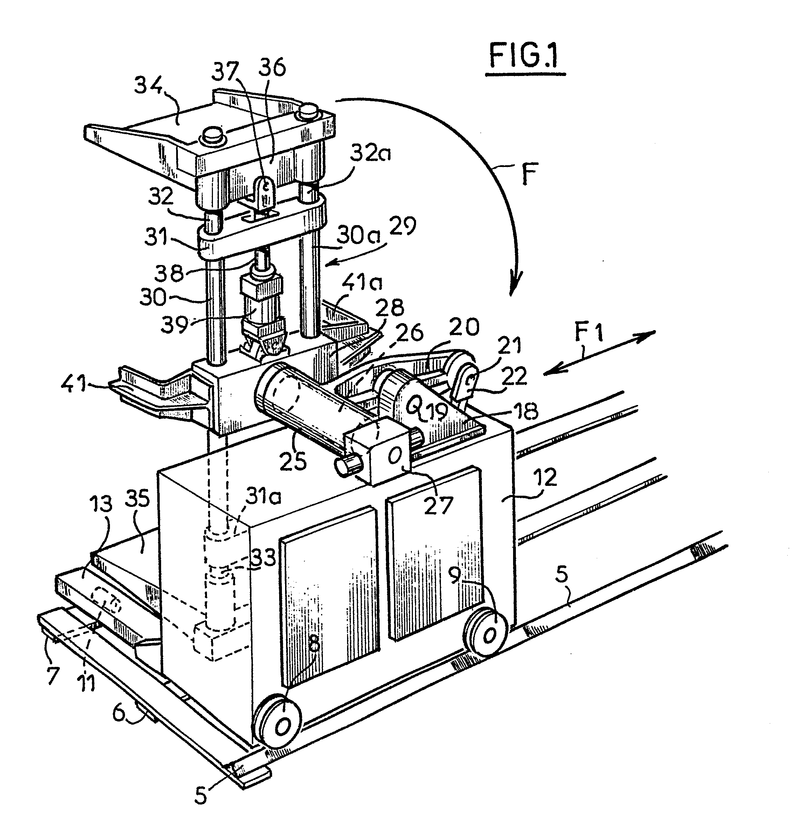

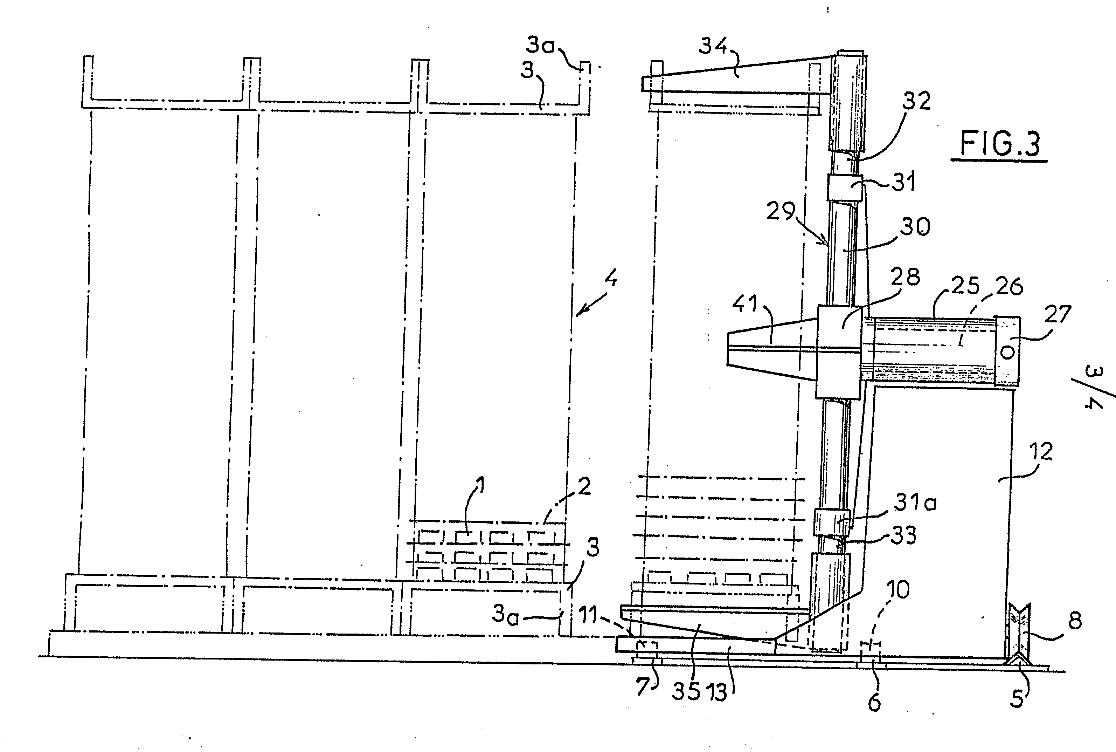

Aux figures 1 à 4, on a représenté un mode de réalisation d'un dispositif de retournement de fromages tels que 1 qui sont disposés sur des claies 2 de type connu empilées l'une sur l'autre pour former une pile 4 comportant à ses deux extrémités des organes de support 3 présentant des pieds 3a par lesquels la pile 4 peut reposer indifféremment d'un côté ou de l'autre sur le sol.

Le dispositif de retournement comprend un rail 5 et des chemins de roulement 6 et 7 fixés sur le sol et sur lesquels se déplace au moyen des roues 8, 9 et de galets 10, 11 un chariot 12, le rail 5 présentant une section triangulaire qui assure le guidage du chariot au moyen des roues 8, 9.

A sa partie inférieure et sur sa face avant, le chariot 12 comporte deux bras fixes 13, 13a qui sont supportés à l'avant par les galets 11 et destinés à s'engager sous le support 3 de la pile 4 de claies.

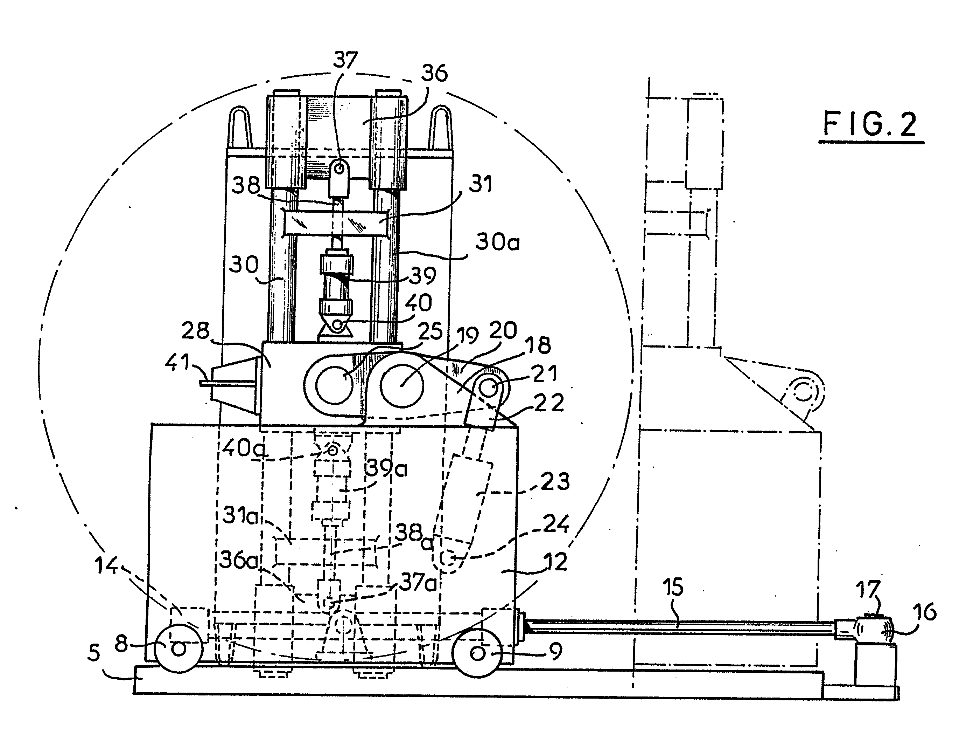

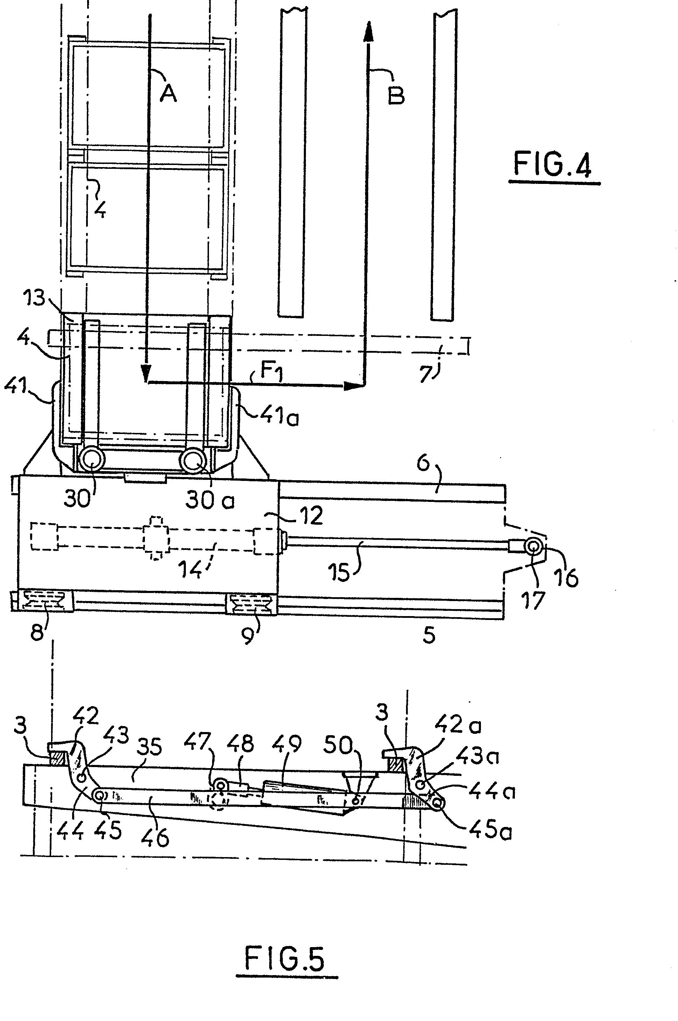

Sur la base du chariot 12 (figures 2 et 4), est fixé un corps de vérin pneumatique 14 dont la tige 15 de commande présente à l'une de ses extrémités un oeil 16 qui est engagé sur une tige d'ancrage 17 fixée sur un bâti ou sur le sol. Sur la paroi supérieure du chariot 12, est fixé un organe de support 18 qui porte un axe 19 sur lequel est monté rotatif un bras 20 présentant à l'une de ses extrémités un axe 21 sur lequel est articulée l'une des extrémités d'une tige de commande 22 d'un vérin pneumatique 23 monté de façon articulée autour d'un axe 24 à l'intérieur du chariot 12 (figure 2).

A l'autre extrémité du bras 20, celui-ci présente un palier 25 dans lequel est monté rotatif un arbre 26 qui est relié d'un côté à l'arbre d'entraînement d'un vérin rotatif 27 et de l'autre côté à une traverse centrale 28 d'un cadre 29.

Le cadre 29 est constitué de deux montants tubulaires 30, 30a reliés à leurs parties supérieure et inférieure par des traverses 31, 31a, lesdits montants tubulaires présentant à leurs parties supérieure et inférieure des alésages dans lesquels sont montées coulissantes deux paires de barres 32, 32a et 33, 33a qui portent respectivement des plateaux 34, 35 s'étendant horizontalement et entre lesquels est maintenue serrée une pile 4 de claies.

Sur une paroi 36, 36a prévue entre les barres 32, 32a et 33, 33a, est articulée autour d'un axe 37, 37a une tige de commande 38, 38a d'un vérin 39, 39a monté de façon articulée autour d'un axe 40, 40a sur la traverse centrale 28. Cette disposition permet, en agissant sur les vérins 39, 39a, de rapprocher ou d'éloigner l'un de l'autre les plateaux 34 et 35.

De part et d'autre de la traverse 28, sont prévus des bras 41, 41a formant une fourche et entre lesquels est engagée la pile 4 de claies.

Sur les plateaux tels que 35 (figure 5), il est prévu un moyen d'accrochage des piles qui est constitué de deux crochets 42, 42a montés de façon articulée autour des axes 43, 43a sur le plateau de manière à engager lesdits crochets sur les traverses de l'organe de support 3. Les crochets 42 présentent une queue 44, 44a sur laquelle est articulée autour d'axes 45, 45a une barre de liaison 46 qui est reliée par une bielle 47 à l'extrémité d'une tige de commande 48 d'un vérin 49 articulé autour d'un axe 50 sur le plateau 35.

Le dispositif fonctionne de la manière suivante.

Les piles 4 de claies portant les fromages étant disposées en file suivant un axe A d'entrée sur un moyen de transport connu non représenté au dessin et le chariot 12 ainsi que le cadre 29 étant disposés initialement suivant l'axe A, on procède au chargement d'une pile 4 sur le plateau 35 et les bras 13, 13a et entre les bras 41, 41a. Ensuite, on agit sur les vérins 39, 39a afin de rapprocher l'un de l'autre les plateaux 34, 35 qui viennent enserrer les deux extrémités de la pile 4 et on agit sur les vérins 49 qui assurent l'engagement des crochets 42, 42a des plateaux 34 et 35 sur les organes de support 3 disposés aux deux extrémités de la pile.

La pile 4 étant verrouillée sur le cadre 29, on actionne le vérin 23 afin de faire pivoter le bras 20 autour de l'axe 19 et de soulever le cadre 29. Le cadre étant en position dégagée des bras 13, 13a, on actionne le vérin 27 afin d'entraîner en rotation le cadre 29 suivant la flèche F et suivant un angle de 180°, de telle sorte que la pile 4 et les fromages 1 qu'elle porte sont retournés de 180°.

Le transfert de l'ensemble suivant la flèche F1 est obtenu en actionnant le vérin 14 qui assure le déplacement du chariot 12 sur le rail 5 et les chemins de roulement 6 et 7.

A la fin du transfert, le cadre 29 portant la pile 4 en position retournée se trouve en regard de l'axe B de la file d'évacuation des piles.

On procède alors à la descente du cadre 29 et de la pile 4 en agissant sur le vérin 23 qui ramène le bras 20 à sa position initiale.

Les crochets 42 et 42a sont dégagés des organes de support 3 et, en agissant sur les vérins 39, 39a, on écarte les plateaux 34, 35 l'un de l'autre afin de libérer la pile et de permettre son évacuation au moyen d'un organe transporteur suivant l'axe B.

En fin d'opération et après déchargement de la pile 4, le chariot 12 est ramené à sa position initiale en regard de la pile suivant l'axe A pour une nouvelle opération.

Bien entendu, diverses modifications peuvent être apportées par l'homme de l'art au mode de réalisation qui vient d'être décrit uniquement à titre d'exemple non limitatif sans sortir du cadre de l'invention.

REVENDICATIONS

_____

1.          Procédé pour le retournement de produits laitiers, notamment de fromages disposés sur des claies empilées les unes sur les autres, caractérisé en ce qu'il consiste à disposer les piles (4) de claies portant les produits laitiers (1) suivant une file A pour alimenter un moyen (12, 29) assurant séquentiellement la rotation d'une pile (4) de claies suivant un angle de 180° et son transfert suivant une direction perpendiculaire à l'axe A de la file d'entrée pour amener celle-ci en regard d'une file B d'évacuation des piles de claies portant les produits laitiers en position retournée.

2.          Dispositif pour le retournement de produits laitiers suivant le procédé de la revendication 1, caractérisé en ce qu'il comprend un chariot (12) déplaçable suivant un chemin de roulement perpendiculaire aux files d'entrée A et de sortie B des piles de claies, ledit chariot (12) présentant à sa partie supérieure un organe de support (18) sur lequel est fixé un axe (19) sur lequel est monté rotatif un bras (20) portant à l'une de ses extrémités un palier (25) dans lequel est monté rotatif un arbre (26) solidaire à l'une de ses extrémités d'un cadre (29) de support des claies et à son autre extrémité d'un organe moteur (27) d'entraînement en rotation, ledit bras (20) étant articulé à son autre extrémité sur une tige (22) de commande d'un vérin (23) articulé sur le chariot (12).

3.          Dispositif suivant la revendication 1, caractérisé en ce que le chariot (12) comporte des roues (8, 9) et des galets (10, 11) par lesquels il est monté sur un rail (5) de guidage et des chemins de roulement (6, 7) rectilignes, ledit chariot (12) étant pourvu d'un vérin (14) de transfert dont la tige (15) est fixée à l'une de ses extrémités sur le sol ou un organe d'ancrage.

4.          Dispositif suivant la revendication 2, caractérisé en ce que le cadre (29) de support des claies est constitué d'une traverse centrale (28) sur laquelle sont fixés l'arbre (26) d'entraînement en rotation et deux montants tubulaires (30, 30a) dans lesquels sont montées coulissantes à leurs deux extrémités deux paires de barres (32, 32a et 33, 33a) supportant deux plateaux (34, 35) s'étendant horizontalement et qui sont reliés chacun à une tige d'un vérin (39, 39a) monté de façon articulée sur la traverse centrale (28).

5. Dispositif suivant la revendication 4, caractérisé en ce que, de part et d'autre de la traverse centrale (28) et s'étendant en avant de celle-ci, sont disposés deux bras (41, 41a) formant une fourche dans laquelle est engagée la pile (4) de claies.

6. Dispositif suivant la revendication 4, caractérisé en ce que, sur les plateaux (34, 35), sont prévus des moyens d'accrochage des extrémités de la pile et qui sont constitués de deux crochets (42, 42a) articulés sur le plateau et reliés par une barre de liaison (46) à une bielle (47) articulée à l'extrémité de la tige de commande d'un vérin (49) articulé sur le plateau.

R E V E N D I C A T I O N S

1.	Dispositif pour le retournement de produits laitiers, notamment de fromages disposés sur des claies empilées les unes sur les autres, dans lequel, sont disposées des piles (4) de claies portant les produits laitiers (1) suivant une file A pour alimenter un moyen (12, 29) assurant séquentiellement la rotation d'une pile (4) de claies suivant un angle de 180° et son transfert suivant une direction perpendiculaire à l'axe A de la file d'entrée pour amener celle-ci en regard d'une file B d'évacuation des piles de claies portant les produits laitiers en position retournée, caractérisé en ce qu'il comprend un chariot (12) déplaçable suivant un chemin de roulement perpendiculaire aux files d'entrée A et de sortie B des piles de claies, ledit chariot (12) présentant à sa partie supérieure un organe de support (18) sur lequel est fixé un axe (19) sur lequel est monté rotatif un bras (20) portant à l'une de ses extrémités un palier (25) dans lequel est monté rotatif un arbre (26) solidaire à l'une de ses extrémités d'un cadre (29) de support des claies et à son autre extrémité d'un organe moteur (27) d'entraînement en rotation, ledit bras (20) étant articulé à son autre extrémité sur une tige (22) de commande d'un vérin (23) articulé sur le chariot (12).

2.	Dispositif suivant la revendication 1, caractérisé en ce que le chariot (12) comporte des roues (8, 9) et des galets (10, 11) par lesquels il est monté sur un rail (5) de guidage et des chemins de roulement (6, 7) rectilignes, ledit chariot (12) étant pourvu d'un vérin (14) de transfert dont la tige (15) est fixée à l'une de ses extrémités sur le sol ou un organe d'ancrage.

3.	Dispositif suivant la revendication 1, caractérisé en ce que le cadre (29) de support des claies est constitué d'une traverse centrale (28) sur laquelle sont fixés l'arbre (26) d'entraînement en rotation et deux montants tubulaires 30, 30a) dans lesquels sont montées coulissantes à leurs deux extrémités deux paires de barres (32, 32a et 33, 33a) supportant deux plateaux (34, 35) s'étendant horizontalement et qui sont reliés à chacun à une tige d'un vérin (39, 39a) monté de façon articulée sur la traverse centrale (28).

4. Dispositif suivant la revendication 3, caractérisé en ce que de part et d'autre de la traverse centrale (28) et s'étendant en avant de celle-ci sont disposés deux bras (41, 41a) formant une fourche dans laquelle est engagée la pile (4) de claies.

5. Dispositif suivant la revendication 3, caractérisé en ce que , sur les plateaux (34, 35) sont prévus des moyens d'accrochage des extrémités de la pile et qui sont constitués de deux crochets (42, 42a) articulés sur le plateau et reliés par une barre de liaison (46) à une bielle (47) articulée à l'extrémité de la tige de commande d'un vérin (49) articulé sur le plateau.

# FIG.1

# FIG.2

FIG.3

0102432

FIG.4

FIG.5

**Office européen des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-2 702 943 (C.O.G. PERSSON) * Colonne 2, ligne 2 - colonne 3, ligne 45; figures 1-7 * | 1-3 | A 01 J 25/16 |
| X | AU-B- 475 801 (MILAN VYHNHALEK) * Page 4, paragraphe 7 - page 7, paragraphe 3; figures 1-2 * | 1-2 | |
| A | CH-A- 600 750 (STUDER MASCHINENBAU AG) * Colonne 1, ligne 39 - colonne 3, ligne 9; figures 1-3 * | 1-2 | |
| A | DE-A-1 936 398 (H. LEISTNER) * Page 2, paragraphe 2 - page 4, paragraphe 1; figures 1-2 * | 1-2 | |
| A | FR-A-2 278 251 (TECHNIFIL ANCIENS ETABLISSEMENTS TIRLET) * Page 2, ligne 38 - page 3, ligne 19; figure 4 * | 1-2 | **DOMAINES TECHNIQUES RECHERCHES (Int. Cl. ³)** A 01 J |
| A | NL-A-7 314 644 (DE LAUWERS B.V.) * Page 4, lignes 13-37; figure 1-7 * | 1-2 | |

Le présent rapport de recherche a été établi pour toutes les revendications

| Lieu de la recherche LA HAYE | Date d'achèvement de la recherche 12-04-1983 | Examinateur NEHRDICH H.J |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82